# EUROPEAN PATENT APPLICATION

(11) **EP 3 991 546 A1**
(43) Date of publication of application: **04.05.2022**
(21) Application number: 21206331.7
(22) Date of filing: 03.11.2021
(51) Int. Cl.: A01G 23/06, F24B 1/182

(54) **STUMP CHIMNEY**

(30) Priority: 03.11.2020 SE 2051275
(71) Applicant: Smart Monter Sverige AB, 429 42 Särö (SE)
(72) Inventor: PLYMOUTH, Jörgen, 429 42 Särö (SE)
(74) Representative: KIPA AB

(57) **Abstract**

There is provided a system for burning a stump, the system comprising a chamber for positioning around the stump having a bottom portion for placement on a ground a first folding plate having a first position and a second position, wherein a space between the chamber and the stump is arranged to be filled with a solid fuel, wherein the first folding plate is arranged on an inside of the chamber facing the stump, wherein the first folding plate is arranged to move from the first position to the second position during the burning of the stump, and wherein the first folding plate is arranged to provide heat to a surface of the stump and allow airflow to rise and circumvent the plate during movement form the first position to the second position.

## Description

### BACKGROUND OF THE INVENTION

### Field of the Invention

This invention pertains in general to the field of burning of stumps, specifically to a system for burning a stump and a method thereof.

### Description of the Prior Art

Stump removal is desired when trees have been cut down, and the ground having the stump should be cleared or used for other matters. One common technique for stump removal is pulling the roots from the ground to uproot the stump. Another method for removing stumps is to burn the stump. Burning a stump requires time and plenty fuel to burn the stump to the ground.

Many attempts have been made to accomplish a simple to use method that is effective in pursuit of burning stumps. Attempts have been made to develop a simple to use burner for burning of stumps.

When burning a stump, it is desirous to provide the stump with sufficient heat and airflow to shorten the time for burning the stump. It is further desirous to achieve reduced usage of fuel to accommodate to the environmental aspects of burning a stump.

US1053102A discloses a stump burner for positioning around a stump. The stump burner comprises a cylindrical chamber with a dome cover having a chimney or smoke pipe provided with a damper adapted to regulate the escape of products of combustion. The cylindrical enclosure is formed by bolting together adjacent segment panels. The panels may be adjusted to provide a stump burner that can be placed on inclined ground.

US1238698A discloses a stump burner for burning a stump without needing attention by an attendant during operation. The stump burner comprises a housing that is to be placed over a stump. The housing comprises a draft opening at a lower end connected to a blast tube support. The blast tube support forms a draft flue. When the housing is placed over the stump, the blast tube is tilted with a serrated edge resting against the side of the stump an as the stump burns the blast tube lowers gradually into a horizontal position.

US1347054A discloses a stump burner having a chamber, and a chimney. The chamber comprises draft holes connected positioned below draft deflectors. Hence, there is room for improvement to devices and methods for stump burning.

### SUMMARY OF THE INVENTION

An object of the present invention is to provide a system and a method for burning a stump that efficiently uses fuel and reduces time for burning of the stump. This is achieved by providing a system for burning a stump and a method for burning a stump.

According to a first aspect, there is provided a system for burning a stump, the system may include a chamber and a first folding plate. The chamber may be arranged for positioning around the stump having a bottom portion for placement on a ground. The first folding plate may have a first position and a second position.

The chamber may be arranged around a stump to form a space between the stump and the chamber. The space between the chamber and the stump may be arranged to be filled with a solid fuel.

The first folding plate may be arranged on an inside of the chamber facing the stump. The first folding plate may be pivotably connected at one edge to the wall of said chamber. The first folding plat may be arranged at a first angle relative to the wall of said chamber in said first position. The first folding plate may further be pivotably arranged to from the first position to the second position during the burning of the solid fuel. This may be achieved by changing the angle of the first angle.

The first folding plate may be arranged to direct heat to a surface of the stump by allowing airflow to rise and circumvent the plate during movement from the first position to the second position.

The chamber may arranged to be placed around a stump, and the space between an inner wall of the chamber and the stump may filled with a solid fuel. The solid fuel is in some examples coal. The space may be filled to a level wherein the folding plate is upheld to the first position by the solid fuel providing the folding plate with a lifting power. The first folding plate can accordingly move to the second position during burning of the stump by in motion lie on the solid fuel. Thus, a bottom side of the folding plate may abut the fuel and as such the burning of the fuel and the stump allows for the folding plate to move from the first position towards the second position.

According to an example the system may be assembled at the site of the stump to be burnt; hence the removal of a stump may be facilitated. The folding plate may allow for heated air rising from the bottom of the chamber to circumvent the plate and to direct heat towards the stump. With the folding plate guiding heat towards the stump the heat needed for burning may increase and the time needed to fully burn the stump may decrease.

The provided system may be re-filled with fuel during the burning of the stump should it be required for efficient burning. This may be accomplished without the need to remove any part of the system.

The configuration of the folding plate may act as a chimney while at the same time guiding heat towards the stump.

In some examples the system may comprise a second folding plate having a first and a second position, wherein the second folding plate is pivotably arranged on the inside of the chamber facing the stump in a position between the ground and the first folding plate. The second folding plate may be configured to obtain the first position when the chamber is filled with the solid fuel and to obtain the second position during the burning of the fuel.

The second folding plate may be pivotably arranged from the first position to the second position by changing the second angle during the burning of the solid fuel.

The second folding plate may be arranged to direct heat to a surface of the stump by allowing airflow to rise and circumvent the second folding plate during the movement form the first position to the second position.

The first folding plate and the second folding plate may be arranged to work in synchrony during the burning of the stump to provide an even heat and an even air flow to the stump.

By having a first and a second folding plate placed at two different heights working in synchrony the time needed to effectively burn the stump may be reduced. Air heated at a bottom of the chamber will rise during burning. The folding plate may guide the heat towards the surface of the stump to improve the burning capacity of the system. By guiding the heat towards the surface of the stump, a higher temperature may be achieved that may improve the efficiency of the burning procedure of the stump.

In some examples the first and or second folding plate may comprise a cut-out configured to guide air towards a surface of the stump and around the folding plate. The cut-out may be arranged at a second edge opposite to the edge connected to the wall. The cut-out may be arranged on the folding plate on a side that abuts the stump during burning. The cut-out may be configured to guide and direct air towards a surface of the stump through said cut-out. Such a configuration may increase the heat that is guided towards the stump during burning thereof.

In some examples, the chamber may comprise at least one first section and at least one second section.

Each one of the first and second sections may have a first extension along a transverse direction, and a second extension along a longitudinal direction as seen in a flat laid state of the sections. The first and second sections may be arranged to be attached to each other along a longitudinal side of the sections when in an assembled state. By providing a modular chamber for the system, a simple to use stump burner may be achieved.

In some examples, the chamber may comprise a plurality of first and second sections.

In some examples the chamber may comprise a plurality of first sections, and a plurality of second sections.

In some examples the first and or second section may comprise a hole proximal to an edge of a transverse side of the section said transverse side configured to be palced on the ground. The sections may be attached such that the hole is placed adjacent the ground when assembling the system. The hole may be configured to draw air from an outside of the chamber to the inside thereof. Such air may be heated by the fuel at the bottom of the chamber and then guided in a direction upwards towards the surface of the stump. The provision of air is beneficial for the efficiency of the system and may increase the heat guided towards the stump. The provision of air through the hole may reduce the burning time of the stump.

In some examples the first and second sections may be arranged to be attached to one another such that there is a height difference at a bottom end between the first and second sections. With such a configuration the chamber may be placed on uneven ground without compromising the burning capacity of the system. Such a configuration may be beneficial when there are roots around the stump that are not on the same level as the ground.

In some examples each one of the first and second section may comprise a plurality of slits a long a first longitudinal side of the section. Each one of the first and second section may comprise a plurality of protrusions extending in a transverse direction from the other one of the longitudinal sides. The protrusions may be arranged to fit into the plurality of slits when the sections are in the assembled state. By providing sections that can be assembled by insertion of protrusions into slits, a simple to assemble chamber may be achieved. With such a configuration, the system may be assembled at the site of the stump.

In some examples the first section may comprise the first folding plate. The second section may comprise the second folding plate. As such, the chamber may be provided such that the folding plated are not directly above one another when the chamber is in the assembled state. This configuration may enhance the guiding of air towards the surfaces of the stump. Hence, the efficiency of the stump burner system may increase. The time for burning a stump may be reduced by such a configuration.

In some examples the system may comprise a plurality of first and a plurality of second sections. By the system comprising a plurality of first and second sections, the system may be used for large stumps and smaller stumps. The system may be adaptable to any size of the stump. A simple to assemble system for burning a stump may be provided.

According to a second aspect, there is provided a method for burning a stump. The method may include
attaching a plurality of first and second sections to one another thereby forming a chamber wherein each one of the first sections comprises a first folding plate and each one of the second sections comprises a second folding plate, each folding plate having a first position and a second position. The chamber may be placed around a stump and form a space between the stump and the chamber.
The first and second folding plates may be positioned in the first position. The space between the stump and the chamber may be filled with a fuel, such as coal. Upon the stump burning, the first and second folding plates may be configured to move towards their second positions.

When attaching the plurality of first and second sections to one another, the chamber may be formed such as to limit the amount of solid fuel, needed to burn the stump by assembling a chamber that has a limited amount of space between the chamber and the stump. The folding plates move from the first position to the second position during burning to guide airflow towards a surface of the stump. Thereby the method provides heats to the stump in an efficient manner, and the time needed to burn a stump may be beneficially reduced.

It should be emphasized that the term "comprises/comprising" when used in this specification is taken to specify the presence of stated features, integers, steps or components but does not preclude the presence or addition of one or more other features, integers, steps, components or groups thereof.

### BRIEF DESCRIPTION OF THE DRAWINGS

These and other aspects, features and advantages of which embodiments of the invention are capable of will be apparent and elucidated from the following description of embodiments of the present invention, reference being made to the accompanying drawings, in which
Fig. 1a shows a first section.
Fig. 1b shows a second section.
Fig. 1c an attachment plate.
Fig. 1d shows a folding plate.
Fig. 2 shows a first section and a second section being attached to one another, and the folding plates being in a second position. Fig. 3 shows a part of an assembled chamber.
Fig. 4 shows a chamber around a stump wherein one section is assembled at a higher height than the other sections.
Fig 5. shows a chamber around a stump wherein two sec is assembled at a higher height than the other section.
Fig. 6 shows a top view of an assembled chamber.
Fig. 7a shows an attachment plate locking a folding plate in a first position.
Fig. 7b shows the attachment plate of Fig. 1c.
Fig. 7c shows a close view of the inner side of the section wall of fig 7a.
Fig. 7d shows a close view of the outer side of the section wall of fig 7a.

### DESCRIPTION OF THE PREFERRED EMBODIMENTS

Specific embodiments of the invention now will be described with reference to the accompanying drawings. This invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the embodiments illustrated in the accompanying drawings is not intended to be limiting of the invention. In the drawings, like numbers refer to like elements.

As used herein, the singular forms "a", "an" and "the" are intended to include the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present.

A system for burning a stump will now be described with reference to the different drawings.

The system comprises a chamber 100 for positioning around the stump 200 having a bottom portion for placement on a ground. The chamber may comprise a first section 101 and a second section 102. The chamber 100 may comprise at least one first section 101 and at least one second section 102. The chamber 100 may comprise a plurality of first sections 101 and a plurality of second sections 102. Preferably, in some examples, the chamber may be a closed chamber encircling the stump. The chamber may comprise a plurality of first and second sections 101, 102. For example, an enclosed chamber may be formed from three sections. In such case the chamber may comprise two first sections 101, and one second section 102. Alternatively, the chamber may comprise one first section 101 and two second sections 102. The chamber 100 is arranged to be placed around the stump 200. A space between the chamber 100 and the stump 200 is configured to receive fuel, preferably a solid fuel.

In an event that a stump is located near an object for example a stone, or a brick wall or something similar, the chamber may be configured to have an open side. Meaning that the chamber may encircle the stump, but no be an enclosed circulation of the stump. For example, the chamber may be formed to encircle the stump by a combination of the object and a plurality of first and second sections 101, 102.

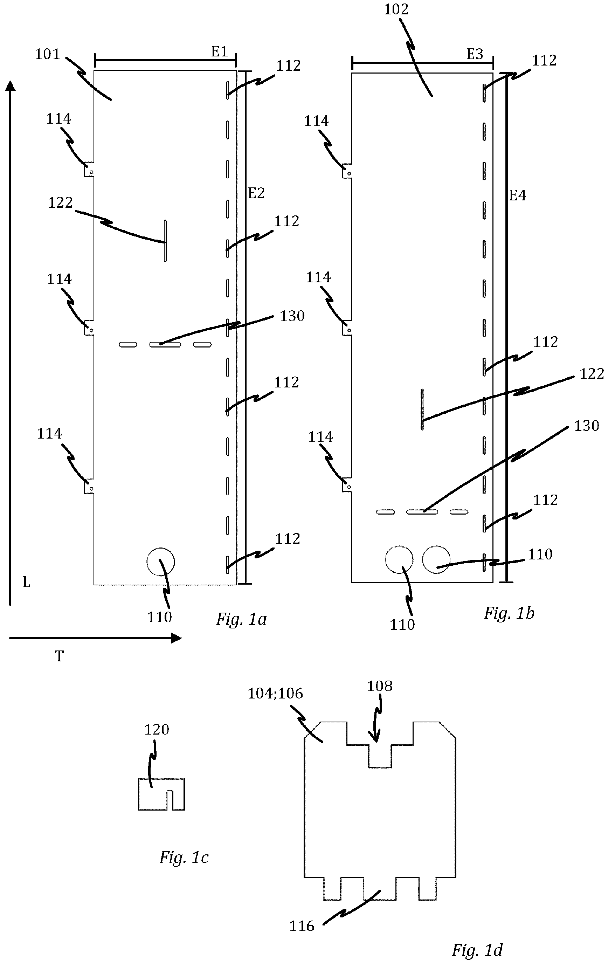

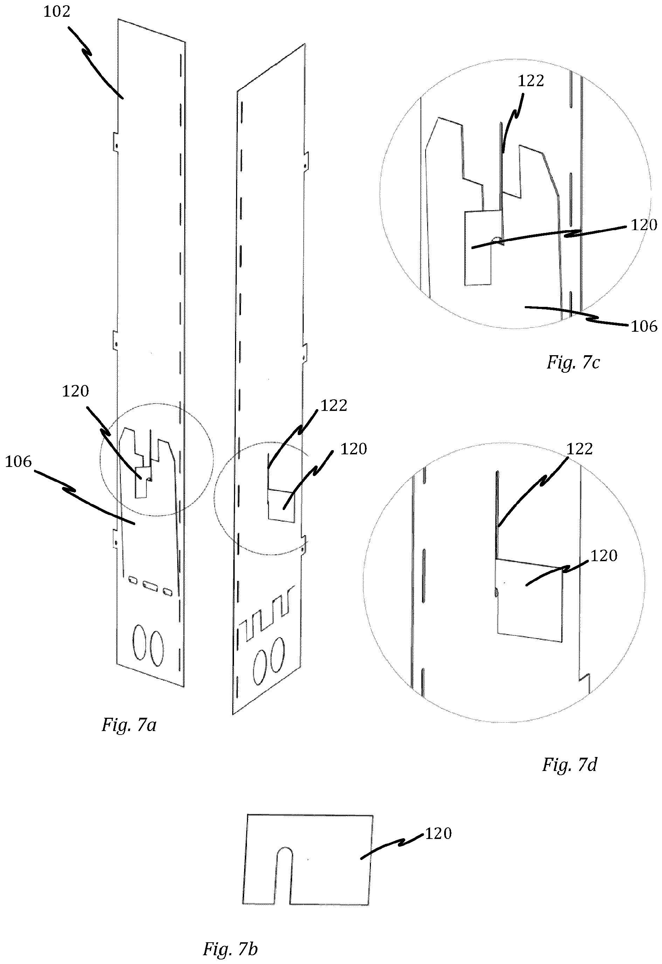

Figs. 1a discloses a first section 101. Fig 1b discloses a second section 102. Fig 1c discloses an attachment plate 120 that will be described in more detail further down with reference to Figs. 7a-7d. Fig. 1d discloses a folding plate 104, 106.

The first section 101 has a first extension E1 along a transverse direction T, as seen in a flat laid state of the section 101. The first section 101 has a second extension E2 along a longitudinal direction L, as seen in a flat laid state of the section 101.

The second section 102 has a first extension E3 along a transverse direction T, as seen in a flat laid state of the section 102. The second section 102 has a second extension E4 along a longitudinal direction L, as seen in a flat laid state of the section 102.

The first extension E1 of the first section 101 may be equal to the first extension E3 of the second section 102. The first extension E1 of the first section 101 may be different from the first extension E3 of the second section 102 thereby provide a more adaptable chamber.

The second extension E2 of the first section 101 may be equal to the second extension E4 of the second section 102. The second extension E2 of the first section 101 may be different from the first extension E4 of the second section 102 thereby provide a more adaptable chamber.

As is evident from Fig 1a-1b, each one of the first and second sections 101, 102, may comprise a plurality of slits 112 a long a first longitudinal side of the section 101, 102. Each one of the first and second sections 101, 102, may comprise a plurality of protrusions 114 extending in the transverse direction T from the other one of the longitudinal sides.

The first and second sections 101, 102 are preferably arranged to be attached to one another along a longitudinal side of the sections 101, 102. It is preferred that at least one of the protrusions 114 is configured to fit into one amongst the plurality of slits 112 when attaching the sections to one another. With such a configuration, the assembly of the chamber and thus the system may be facilitated. This configuration may allow for the system to be assembled at the site of the stump to be burnt. All slits 112 and all protrusions 114 may be arranged to fit into one another. A plurality of slits 112 and protrusions 114 along the height of the sections may facilitate attachment thereof to one another at different heights. Thus, facilitating placement on uneven grounds, or around roots.

In some configurations the protrusions 114 may comprise a hole or slit. Such hole may be configured for receiving a locking unit. If a locking unit is inserted into the hole when the first and second sections are attached to one another, the locking unit may be configured to prevent any unintentional unattachment of the first section form the second section. The locking unit may be a wire, or a clamp, or any other suitable unit for preventing the protrusions of the sections 101, 102 from being unintentionally released from the slits 112.The plurality of protrusions preferably fits into the plurality of slits. As such, the first and second sections 101, 102 may be arranged to be attached at different heights to one another. With a height difference, when the chamber 100 of assembled first and second sections 101, 102 is placed on the ground, uneven placement on bumpy ground may be avoided. By changing the height of the sections 101, 102, any roots in the vicinity of the stump 200 may not reduce the capacity of the system. The section about the root or unevenness of the ground may be attached at a higher height than the remainder of sections 101, 102.

Another benefit of height adjustable sections 101, 102 may be to provide an air inflow at the bottom of the chamber. Such a configuration may be beneficial to provide airflow to the stump, and improve heat circulated towards the stump.

In some configurations, the first section 101 may comprise a hole 110 proximal to an edge of a transverse side of the section 101. The second section 102 may comprise a hole 110 proximal to an edge of a transverse side of the section 102. Both the first and/or the second section 101, 102 may comprise at least one hole 110 proximal to the edge of a transverse side of the section 101, 102. Preferably, the at least one hole 110 should be arranged proximal to the edge of a lower transverse side of the section 101, 102. It is to be understood that the hole 110 may have different shapes. For example, the hole 110 may have a circular shape, or a rectangular shape, or a triangular shape, or a squared shape etc.

Fig. 1d discloses a folding plate 104, 106 that may be used with either the first section 101, or the second section 106. The first folding plate 104 may have an equal shape to the second folding plate 106. In some configurations of the system the first folding plate 104 may have a shape different from the shape of the second folding plate 106.

By having equal shapes of the first and second folding plate 104, 106 the manufacturing of the system may be facilitated.

The first and/or second folding plate 104, 106 may comprise a cut-out 108 configured to guide air towards a surface of the stump and around the folding plate. The cut-out 108 may have different forms. The cut-out 108 may for example have a U-shape, or a V-shape, or have a shoulder shape etc. The cut-out 108 may be a sectionalized cut-out without straight lines, such as illustrated in the figures.

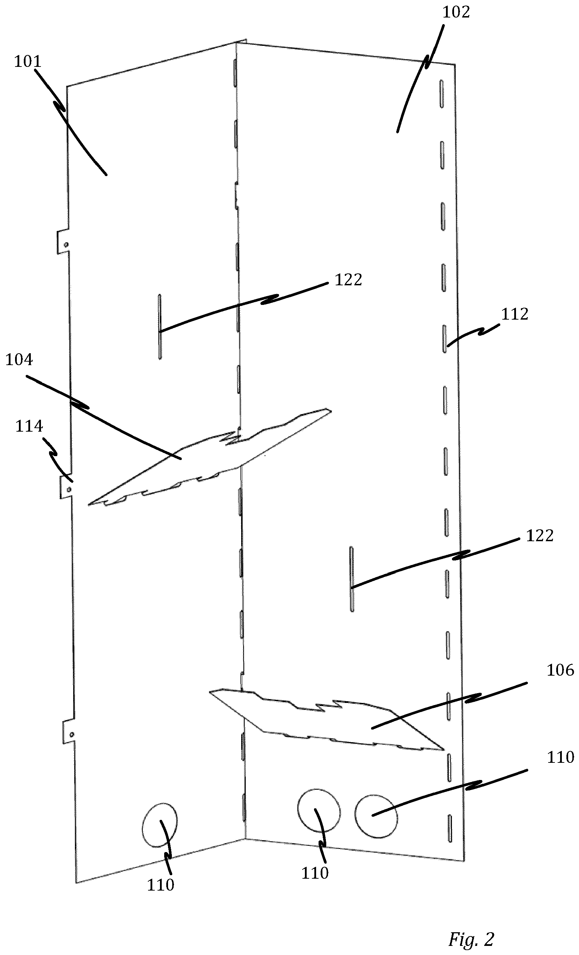

The folding plate and its functions will now be described in more detail with reference to Figs. 2-3.

The chamber comprises a first folding plate 104 arranged on an inside of the chamber 100 in a direction for facing the stump 200. The folding plate 104 may be pivotably connected at one side to the wall of the chamber. The folding plate 104 may be removably connected to the wall. The first folding plate 104 has a first position and a second position. The first folding plate 104 is arranged to move from the first position to the second position during the burning of the stump. In the first position, the first 104 folding plate may have a first angle relative the wall of the chamber. During the burning of the solid fuel, the first folding plate 104 may be pivotable changed into the second position. During the burning, the angle of the folding plate relative to the wall changes. With the changing of the first angle, the second position may be achieved. The first folding plate 104 may start in the first position being parallel to the wall of the chamber 100. The space between the stump 200 and the chamber is to be filled with a solid fuel. The solid fuel is preferably filled to a level wherein the coal holds the first folding plate 104 in the first position. The solid fuel may when filling the space between the stump 200 and the chamber cover the stump 200. The space between the chamber and the stump may be arranged such that one layer of a fuel can be filled around the stump. The space may be arranged such as to limit the fuel needed but still provide efficient burning of the stump. In some examples, the chamber may be arranged around the stump such that the space between the stump and the wall of the chamber has a distance of a coal briquette.

During the burning of the stump, the first folding plate 104, moved with the burning of the coal to its second position. The second position may be when the first folding plate 104 reaches a predetermined angle relative to the wall of the chamber 100. Meaning, that the folding plate 104 reaches the second position by changing the angle of the folding plate.

A configuration of the second position on the folding plates is showcased in Fig. 2. The folding plates may be adjustable such as to allow for different angles relative to the wall of the chamber wall. It may be beneficial for the efficiency of the burning procedure that the second position is less than 90 degreed relative to the wall of the chamber. Such a configuration may prevent the system from suffocating the burning of the fuel placed between the stump and the chamber wall.

The first folding plate is arranged to provide heat to a surface of the stump and allow airflow to rise and circumvent the plate during the movement from the first position to the second position.

The system may comprise a second folding plate 106 having a first and a second position. The second folding plate 106 may preferably be pivotably connected to the wall of the chamber. When the second folding plate 106 is in the first position the second folding plate, may be parallel to the wall of the chamber 100. The second folding plate 106 may have a first angle in the first position relative to the wall of the chamber. During the burning of the solid fuel, the second folding plate 106 may be pivotable changed into the second position. During the burning, the angle of the folding plate relative to the wall changes. With the changing of the first angle, the second position may be achieved. The second folding plate 106 may be positioned between the ground and the first folding plate 104. Thus, the first and second folding plates 104, 106 may be arranged at different heights of the chamber. Each plate is pivotably arranged from the respective first position to the respective second position. During the burning of the stump, the second folding plate 106, moves with the burning of the coal to reach its second position. The second position may be when the second folding plate 106 reaches a predetermined angle relative to the wall of the chamber 100. The second folding plate is arranged to provide heat to a surface of the stump and allow airflow to rise and circumvent the plate during the movement from the first position to the second position.

The first folding plate 104 and the second folding pate 106 may be configured to work in synchrony to provide an even heat flow to the stump. The synchrony of the two folding plates 104, 106 may provide an even air flow towards the stump 200.

The first section 101 may comprise the first folding plate 104, and the second section 102 may comprise the second folding plate 106. With such a configuration each section 101,102 may comprise a folding plate 104, 106. By alternating first sections 101 and second sections 102, a synchrony of alternating folding plates may be achieved where the first folding plates are positioned higher relative to the second folding plates 106.

The first and second folding plates 104, 106 may work synchronous together with the holes 110 at the bottom of the first and/or second sections 101, 102.

Air may be drawn in through the holes 110 from outside of the chamber 100. Preferably, such hole 110 may be arranged in the first and/or second section 101, 102 at a side configured to be placed on the ground. The hole 110 may be located at a position lower than the second folding plate 106. The air passes over the coal and is thereby heated. When the heated air rises and reaches the folding plate 104, 106 the plate guides the heated air towards the stump. The heating of the inflow of air increases the heat that may be transferred to the stump, thereby efficient burning of the stump may be achieved.

When the folding plates 104, 106 work in synchrony, the heated air may pass the second folding plate 106 at first. Afterwards the heated air may pass the first folding plate located at a higher position then the second folding plate 106. The air leaving the second lower folding plate 106 may again be directed/redirected towards the stump by the first folding plate 104.

The cut-out 108 of each one of the folding plates 104, 106 may provide the stump with an increased flow of heated air. With the cut-out 108, heated air that raises may be guided through said cut-out. With the cut-out 108 arranged on the side opposite the side connected to the wall, the cut-out will be adjacent the stump. As such, heated air will rise around the folding plate, and through the cut-out. The heated air will thus by the cut-out be directed/guided towards the stump. The cut-out 108 guides the air closer to the stump. Thus, provide the stump with increased heat and increased burning capacity may be achieved.

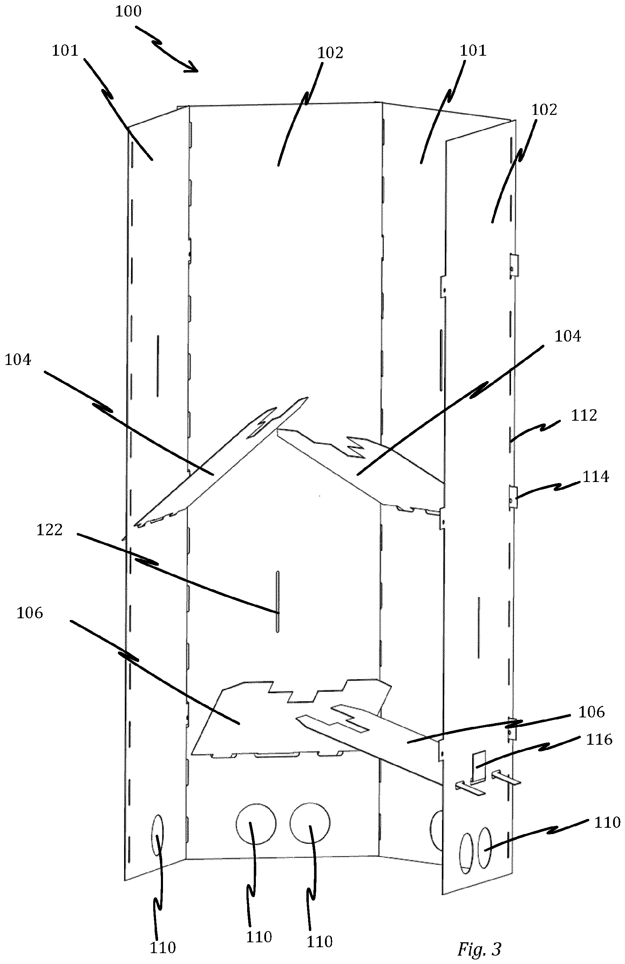

As is evident from Fig. 3 the system may comprise a plurality of first sections 101, and a plurality of second sections 102. In the showcased configuration, the first sections 101 comprises a single hole 110 at the bottom side of the section 101. The second sections 102 comprises two holes 110 at the bottom side of the section 102.

The folding plate 104, 106 may be formed integral with the chamber. The folding plates 104, 106 may be formed integrally with the first and second sections 101, 102 respectively.

The first and second sections 101, 102 may each have at least one slit 130 configured for receiving a folding plate 104,106. The folding plate may comprise at least one protrusion 116 configured to be placed into a slit 130 of the first or second section 101, 102.

When the folding plate 104, 106 is inserted into the slit 130 for receiving a folding plate 104, 106 the protrusion 116 may be bendable. The bendable protrusion 116 may be bent to a folding angle. The folding angle may determine the angel of the second position for the folding plate in relation to the chamber wall.

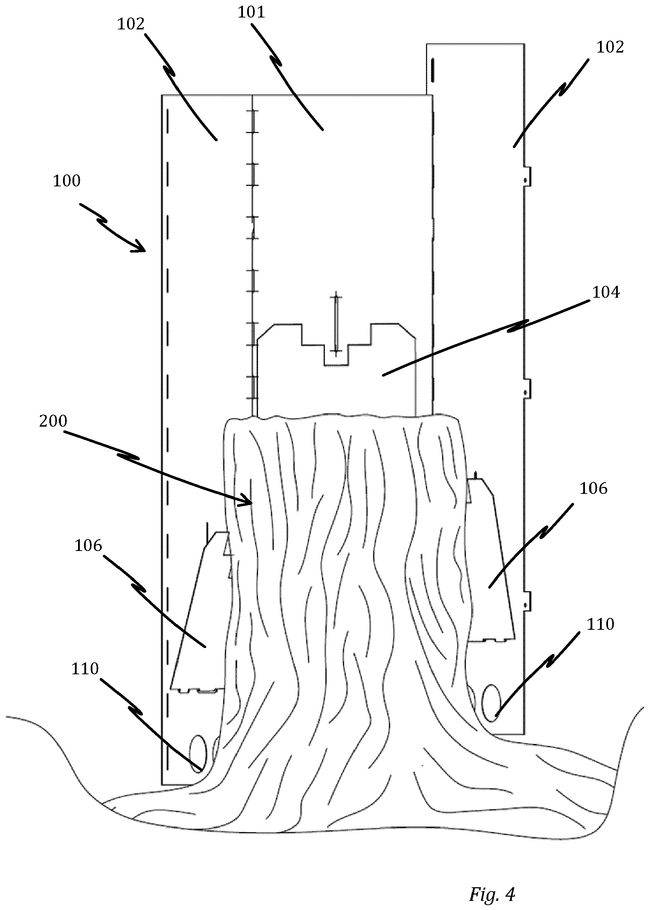

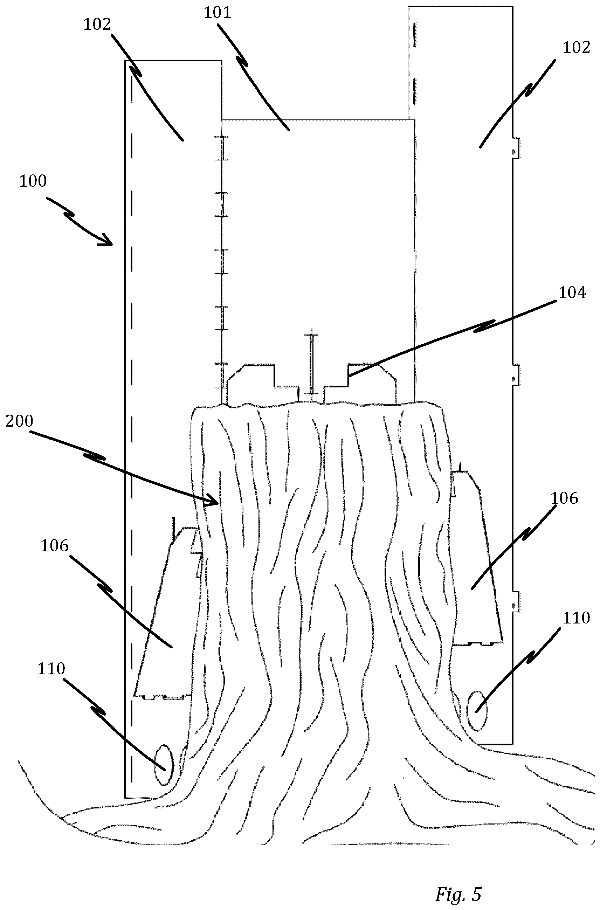

Now turning to Fig. 4-5. The width of the first and second sections may not be equal in all configurations of the system. By having sections with different widths E1, E3, the system may be adaptable to a wide variety of sizes of stumps. As is shown in the figures, the sections are placed at different heights from the ground. This may accommodate for burning stumps at different grounds wherein the ground may be tilted or there are roots in the vicinity of the stump. It is preferred that as much as possible of the bottom of the chamber, or sections 101, 102, abuts the ground when placing the chamber around the stump.

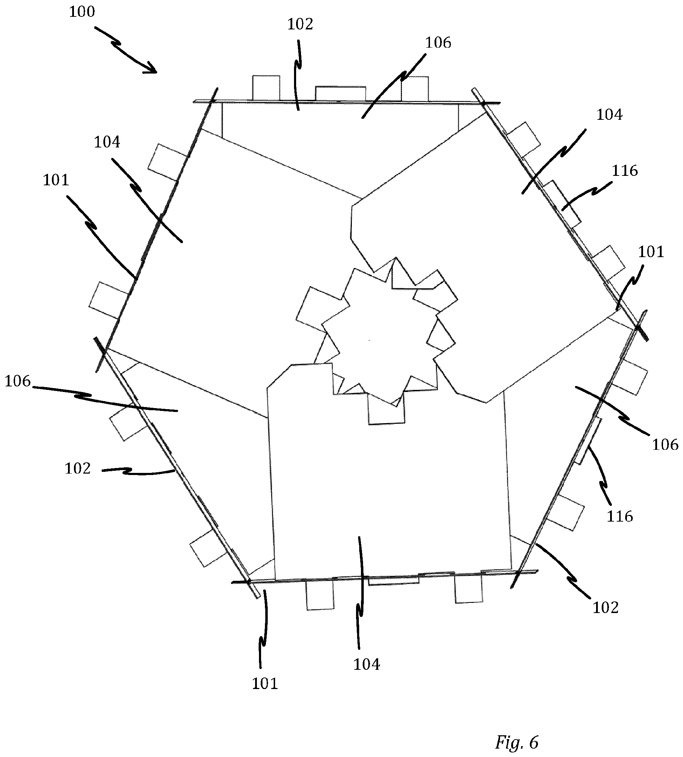

Fig. 6 shows a top view of a configuration of the system having three first sections 101, and three second sections 102. The first and second folding plates 104, 106 forms in their different layers what is seen as a lid structure for the system. The first and second folding plates 104, 106 allow for air to circulate within the chamber, around the stump, and out of the chamber. The different heights of the first folding plates 104 in relation to the second folding plates may enhance the efficiency of the system.

Now turning to Figs 7a-7b, the attachment plate 120 will be described in detail.

Fig 7b shows a configuration of the attachment plate. The attachment plate may have a rectangular form and comprise a cut-out. The attachment plate 120 may be configured as a hook.

As evident from Fig. 7a, the attachment plate 120 may have a corresponding attachment slit 122 in the section 101, 102. The attachment plate 120 may be arranged for insertion into the corresponding slit into the section 101, 102 and to removably lock a folding plate in its first position as seen in close view in Fig. 7c. A part of the attachment plate 120 works with a gripping mechanism around the folding plate. Another part of the attachment plate 120 allows a user to lock and or release the locking configuration from an outside of the chamber. The locking configuration may be released by movement of the attachment plate 120 in a direction upwards on the outside of the chamber. As user may grip the part of the attachment plate 120 that is on the outside of the chamber as disclosed in Fig. 7d.

The system may be used in different steps to burn a stump. In a configuration of a plurality of first and second sections 101, 102, the method for burning a stump may comprise attaching the plurality of first and second sections to one another thereby forming a chamber wherein each one of the first sections comprises a first folding plate and each one of the second sections comprises a second folding plate. The chamber is placed around the stump that is to be burned. The folding plates 104, 106 are to be placed in their respective first position. This may be done by activating the releasable locking configuration of the attachment plate 120. The space between the stump and the chamber is filled with a solid fuel. Preferably the solid fuel is coal. When the coal upholds the folding plates in their first positions, the attachment plate may be released therefrom. During the burning of the stump, the folding plates will move from the first positions to the second positions.

The present invention has been described above with reference to specific embodiments. However, other embodiments than the above described are equally possible within the scope of the invention. Different method steps than those described above, may be provided within the scope of the invention. The different features and steps of the invention may be combined in other combinations than those described. The scope of the invention is only limited by the appended patent claims.

## Claims

1. A system for burning a stump (200), the system comprising:
a chamber (100) for positioning around the stump (200) having a bottom portion for placement on a ground
a first folding plate (104) having a first position and a second position,
wherein a space between the chamber (100) and the stump (200) is arranged to be filled with a solid fuel,
wherein the first folding plate (104) is arranged on an inside of the chamber (100) facing the stump (200) and the first folding plate being pivotably connected at one edge to the wall of said chamber and being arranged at a first angle relative to the wall of said chamber in said first position when said chamber is filled with said solid fuel,
wherein the first folding plate (104) is pivotably arranged from the first position to the second position during the burning of the solid fuel, and
wherein the first folding plate (104) is arranged to direct heat to a surface of the stump (200) by allowing airflow to rise and circumvent the first folding plate (104) during movement from the first position to the second position, and
wherein the system comprises
a second folding plate (106) having a first and a second position, wherein the second folding plate (106) is pivotably arranged on the inside of the chamber (100) facing the stump (200) in a position between the ground and the first folding plate (104), the second folding plate is configured to obtain the first position when the chamber is filled with the solid fuel and to obtain the second position during the burning of the fuel.

2. The system according to claim 1, wherein the second folding plate in the first position is arranged at a second angle relative to the wall of the chamber in the first position,
wherein the second folding plate (106) is pivotably arranged from the first position to the second position by changing the second angle during the burning of the solid fuel,
wherein the second folding plate is arranged to direct heat to a surface of the stump by allowing airflow to rise and circumvent the second folding plate (106) during movement from the first position to the second position.

3. The system according to any one of the previous claims, wherein the first and/or second folding plate (104, 106) comprises a cut-out (108) at a second edge opposite to the edge connected to the wall and wherein the second edge is configured to abut the stump and the cut-out (108) is configured to guide air towards a surface of the stump (200) through said cut-out (108) and around the folding plate (104, 106).

4. The system according to any one of the previous claims wherein the chamber (100) comprises at least one first section (101) and at least one second section (102),
each one of the first and second sections (101, 102) having a first extension (El, E3) along a transverse direction (T), and a second extension (E2, E4) along a longitudinal direction (L) as seen in a flat laid state of the sections, and
wherein the first and second sections (101, 102) are arranged to be attached to each other along a longitudinal side of the sections when in an assembled state thereby forming the chamber.

5. The system according to claim 4, wherein said system comprises a plurality of sections wherein said plurality of sections comprises a plurality of first sections (101) and second sections (102).

6. The system according to claim 4 or 5, wherein the first and/or second section (101, 102) comprises a hole (110) proximal to an edge of a transverse side of the section (101, 102).

7. The system according to any one of claims 4-6,
wherein the first and second sections (101, 102) are arranged to be attached such that there is a height difference at a bottom end between the first and second sections (101, 102) said transverse side being placed the ground, said hole (110) is configured to draw air into the chamber.

8. The system according to any one of claims 4-7,
wherein each one of the first and second section (101, 102) comprises
a plurality of slits (112) a long a first longitudinal side of the section (101, 102), and
a plurality of protrusions (114) extending in the transverse direction (T) from the other one of the longitudinal sides,
wherein the protrusions (114) are arranged and configured to fit into the plurality of slits (112) when the sections (101, 102) are in the assembled state.

9. The system according to any one of claims 4-8,
wherein the first section (101) comprises the first folding plate (104), and wherein the second section (102) comprises the second folding plate (106), and wherein the chamber comprises a plurality of first sections (101), and a plurality of second sections (102).

10. Method for burning a stump, the method comprising:
attaching a plurality of first and second sections to one another thereby forming a chamber wherein each one of the first sections comprises a first folding plate and each one of the second sections comprises a second folding plate, each folding plate having a first position and a second position,
placing the chamber around a stump,
positioning the first and second folding plates in the first position,
filling the space between the stump and the chamber with a fuel, such as coal,
wherein the first and second folding plates are configured to move towards their second positions upon the fuel burning.
